# EUROPEAN PATENT SPECIFICATION

(11) **EP 2 068 526 B1**
(45) Date of publication and mention of the grant of the patent: **30.04.2014**
(21) Application number: 08253608.7
(22) Date of filing: 05.11.2008
(51) Int. Cl.: H04L 29/06

(54) **End-to-end network security with traffic visibility**
End-to-End-Netzwerksicherheit mit Verkehrssichtbarkeit
Sécurité de bout en bout de réseau avec visibilité de trafic

(30) Priority: 06.11.2007 US 935783
(43) Date of publication of application: 10.06.2009
(73) Proprietor: Intel Corporation, Santa Clara, CA 95054 (US)
(72) Inventor: Long, Men, Hillsboro, Oregon 97124 (US); Walker, Jesse, Portland, Oregon 97229 (US); Durham, David, Beaverton, Oregon 97007 (US); Millier, Marc, Banks, Oregon 97106 (US); Grewal, Karanvir, Hillsboro, Oregon 97124 (US); Dewan, Prashant, Hillsboro, Oregon 97124 (US); Savagaonkar, Uday, Beaverton Oregon 97006 (US); Williams, Steven D, Portland Oregon 97229 (US)
(74) Representative: Beresford, Keith Denis Lewis

(56) References cited:
- US-B1- 7 093 126
- MCGREW D A ET AL: "The Galois/Counter Mode of Operation (GCM)", INTERNET CITATION, 2004, XP002456593, Retrieved from the Internet: URL:http://citeseer.ist.psu.edu/704180.htm l [retrieved on 2004-01-01]

## Description

### TECHNICAL FIELD

This application relates to the fields of communication and networking, and in particular, to maintaining end-to-end security between clients and a server, while allowing traffic visibility to intermediate network devices.

### BACKGROUND

Many network security protocols depend on negotiating session keys between clients and servers using expensive asymmetric cryptography and then requiring servers to keep track of a large number of symmetric keys negotiated for each client session. End-to-end security means that there is data authenticity and/or confidentiality of data from one side of a communication in the network all the way to the other side, e.g., client-to-server and server-to-client. Traffic visibility means that intermediate servers and information technology (IT) monitoring devices can view the secured traffic. To some degree, these two goals oppose one another, but both are important for network security in managed environments, where authorized intermediate devices need access to the data for performing valuable network functions such as security scanning for virus / worms.

End-to-end security is important for both clients and servers in order to exclude third parties from tampering with traffic between the client and server, where the client is the most exposed to direct manipulation or tampering. Thus, the uniqueness of the client's secrets (cryptographic keys) is paramount to prevent the compromise of one client from gaining access to the traffic of other clients. Traffic visibility is vital to the IT administration and requires the IT administration devices to observe traffic to detect abnormal phenomenon. Many current major security protocols only provide end-to-end security without concern for traffic visibility.

Recently, for efficiency, the industry has been moving towards single-key combined mode cipher (e.g. AES-GCM and AES-CCM) for both packet encryption and authentication. Resultantly, intermediate network devices having the single-key potentially can compromise the security aspect of network traffic authenticity in terms of end-to-end security. In other words, attackers who are successful in compromising an intermediate network device can freely spoof any legitimate packets that would be accepted by endpoints of clients and server. [AES = Advanced Encryption Standard; GCM = Galois Counter Mode; CCM = Counter CBC-MAC; and CBC-MAC = Cipher Block Chain Message Authentication Code.]

Further details of the AES-GCM single-key combined mode cipher have been published in the following article: "The Galois/Counter Mode of Operation (GCM)", McGrew, D. A. et al. This describes an apparatus for data encryption and authentication of the kind comprising: a media access control 'MAC' processing unit configured to output one or more packets for transmission over a network; and a combined cipher-authentication unit coupled to the MAC processing unit to cipher each of the packets and generate an authentication tag to accompany each of the ciphered packets prior to their transmissions, the combined cipher-authentication unit being configured to cipher a packet and generate an authentication tag to accompany the ciphered packet in parallel, in a single pass. As described in this article, a single-key is used for encryption and for authentication.

### SUMMARY THE INVENTION

The present invention provides an apparatus of the kind just mentioned that is characterised by employing an encryption key and an authentication key having respective different key values.

Other aspects of the present invention are set out in the appended independent claims.

### BRIEF DESCRIPTION OF THE DRAWINGS

Embodiments of the present invention will be described by way of exemplary embodiments, but not limitations, illustrated in the accompanying drawings in which like references denote similar elements, and in which:
Figure 1 is an enterprise network security diagram in accordance with various embodiments of the present invention;
Figure 2 is a depiction of a sequence on a client platform in accordance with various embodiments;
Figure 3 is another client platform sequence in accordance with various embodiments;
Figure 4 is a server sequence in accordance with various embodiments;
Figure 5 is another sequence in accordance with various embodiments;
Figure 6 is a hardware depiction in accordance with various embodiments; and
Figure 7 depicts the Crypto engine of Figure 6 in further details, in accordance with various embodiments.

### DETAILED DESCRIPTION OF ILLUSTRATIVE EMBODIMENTS

Illustrative embodiments of the present invention include, but are not limited to, methods and apparatuses for maintaining end-to-end security between clients and a server, while allowing traffic visibility to intermediate network devices. The intermediate network devices are unlikely to be able to fabricate or forge messages to spoof either the clients and/or the server, even if they are compromised by adversaries.

Various aspects of the illustrative embodiments will be described using terms commonly employed by those skilled in the art to convey the substance of their work to others skilled in the art. However, it will be apparent to those skilled in the art that alternate embodiments may be practiced with only some of the described aspects. For purposes of explanation, specific numbers, materials, and configurations are set forth in order to provide a thorough understanding of the illustrative embodiments. However, it will be apparent to one skilled in the art that alternate embodiments may be practiced without the specific details. In other instances, well-known features are omitted or simplified in order not to obscure the illustrative embodiments.

Further, various operations will be described as multiple discrete operations, in turn, in a manner that is most helpful in understanding the illustrative embodiments; however, the order of description should not be construed as to imply that these operations are necessarily order dependent. In particular, these operations need not be performed in the order of presentation.

The phrase "in one embodiment" is used repeatedly. The phrase generally does not refer to the same embodiment; however, it may. The terms "comprising," "having," and "including" are synonymous, unless the context dictates otherwise. The phrase "A/B" means "A or B". The phrase "A and/or B" means "(A), (B), or (A and B)". The phrase "at least one of A, B and C" means "(A), (B), (C), (A and B), (A and C), (B and C) or (A, B and C)". The phrase "(A) B" means "(B) or (A B)", that is, A is optional.

Embodiments of the present invention provide a security protocol that enables both end-to-end security between clients and sever, and traffic visibility for intermediate network devices, employing single-pass combined encryption-authentication with two keys, an encryption key and an authentication key, having different key values. Hardware-based, wire speed end-to-end encryption and authentication may be achieved on a frame-by-frame basis or a packet-by-packet basis. For the purpose of this application, the terms "frame" and "packet" may be considered interchangeable, unless the context clearly indicates otherwise. In various embodiments, clients and server communicate with a domain controller that grants the encryption and authentication keys, one set for each client-server relationship. Upon receipt of the encryption and authentication keys, a client and server pair uses them for combined encryption-authentication and for combined authentication-decryption. For traffic visibility without compromise authentication, the domain controller may also send the encryption keys (but not the authentication key) to authorized IT network devices, such as, for example, an IT monitoring device/host. With the authorized IT network devices having the encryption keys, the authorized IT network devices are able to decrypt the encrypted pass-thru traffic at full wire speed, thus, enabling traffic visibility by the authorized IT network appliances. However, without the authentication keys, the IT network devices are unable to substitute authentications, and therefore unable to spoof the clients and server.

In various embodiments, the single-pass dual-key combined encryption-authentication mechanism may be practiced with a storage saving derived key mechanism. An example of a derived key mechanism may be seen in U.S. Application 11/731,562, entitled "End-to-End Network Security with Traffic Visibility", filed March 20, 2007.

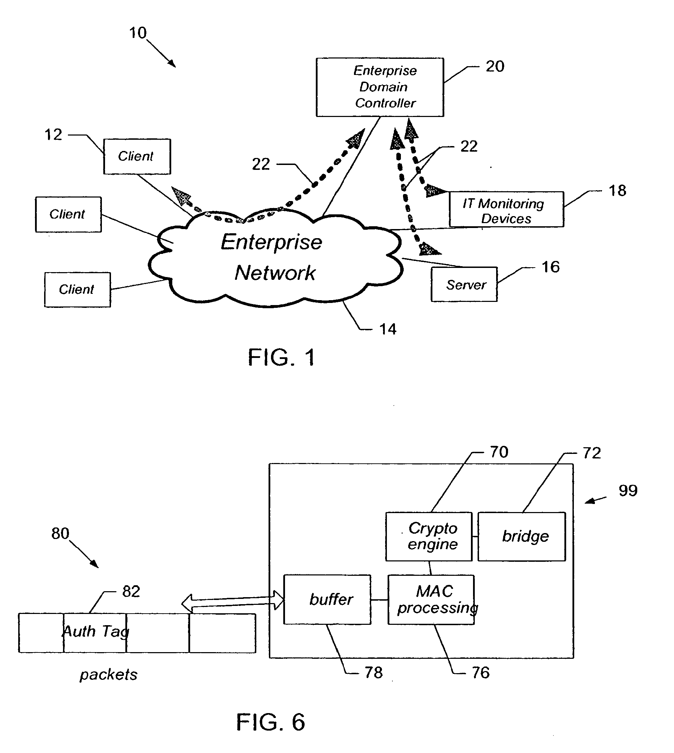

Referring to Figure 1, an enterprise network 14 may be leveraged to communicate a plurality of clients 12 with one or more servers 16. For the illustrated embodiments, an enterprise domain controller 20 may be responsible for maintaining both end-to-end security for the entire enterprise and for maintaining traffic visibility for the server 16 and the IT monitoring devices 18. The domain controller 20 may be, for example, an authentication, authorization, and auditing (AAA) server, a key distribution server, or a policy server, to mention a few examples.

The enterprise domain controller 20 distributes the encryption and authentication keys (as indicated by arrows 22) to clients 12 and server 16. Additionally, the enterprise domain controller 20 also distributes the encryption keys (but not the authentication keys) to IT network monitoring host 18. As used herein the term "keys" include both the pre-derived or fully derived forms. In other words, as alluded to earlier, domain controller 20 may distribute the encryption and authentication keys "fully derived", or may practice a storage saving "derive key" mechanism, and distribute these keys pre-derived to authorized devices such as application servers and intermediate IT devices. In various embodiments, the domain controller always distributes derived keys to the clients, as clients are considered more vulnerable to attacks and hence compromising any pre-derived keys.

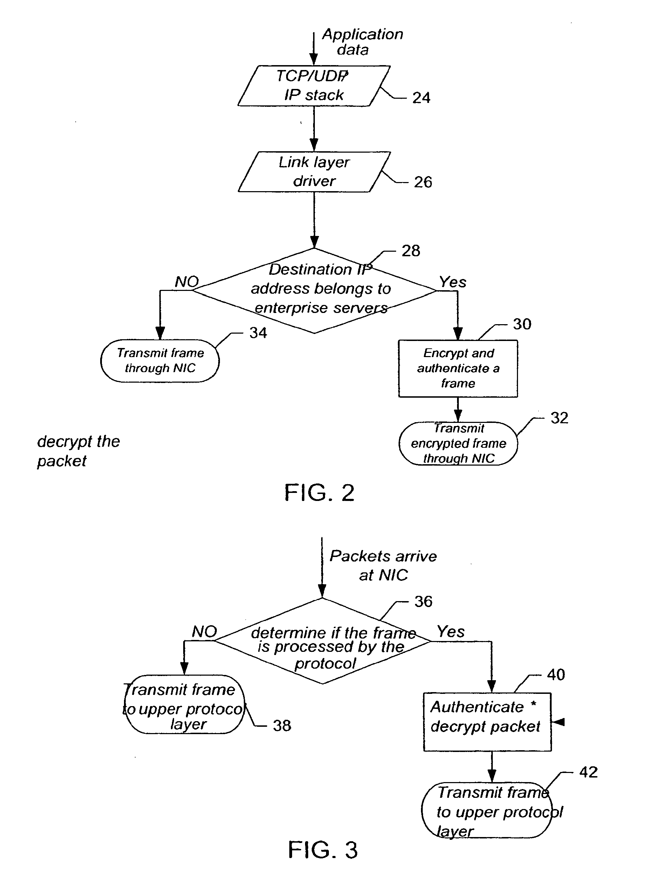

Referring to Figure 2, a sequence of a client applying the encryption and authentication keys distributed by the domain controller 20 is depicted. Each of the outgoing frames to an enterprise server is encrypted and authenticated in a single-pass using the two received keys, the encryption key and the authentication key. Initially, application data comes into a Transmission Control Protocol (TCP)/User Datagram Protocol (UDP)/Internet Protocol (IP) stack as indicated at 24. The Internet Protocol packets are distributed to a server by the stack. Then the link layer driver forms the layer-2 frame, as indicated at 26. A check at diamond 28 determines whether the destination Internet Protocol address belongs to enterprise servers. If not, the frame is transmitted through a network interface card as indicated at 34. If so, the frame is encrypted and authenticated, as indicated at 30, in a single-pass using the appropriate encryption and authentication keys stored in hardware. Then the encrypted frame is transmitted through the network interface card as indicated at 32.

When a client platform receives a frame, indicated as packets arrive at network interface card, a check at diamond 36, in Figure 3, determines if the frame is processed by the protocol described herein. If not, the frame is transmitted to an upper protocol layer, as indicated at 38, and, if so, the packet is authenticated using the authentication key. And upon successful authentication, the packet is decrypted using the appropriate encryption key stored in hardware as indicated at block 40. The frame is then transmitted to the upper protocol layer as indicated at 42.

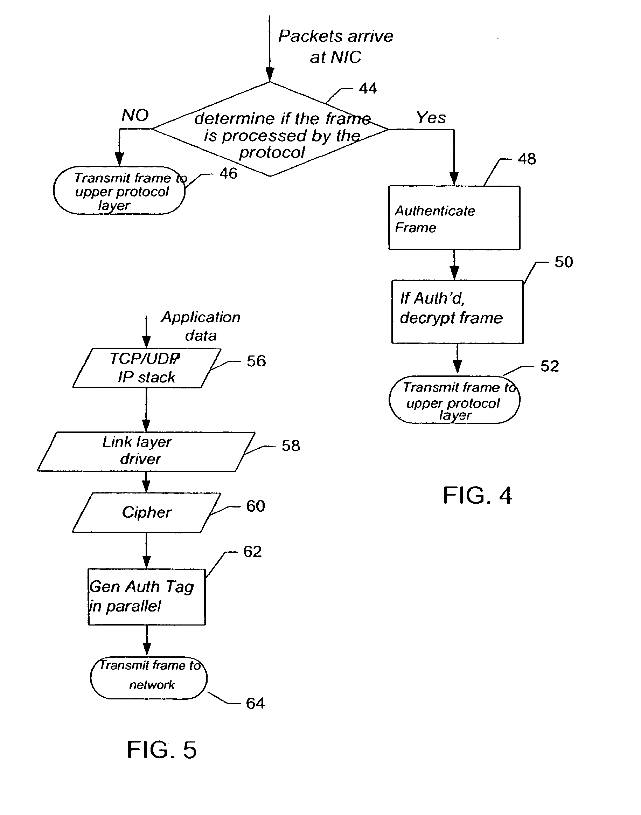

Next, referring to Figure 4, when the server 16 receives a frame, indicated as packets arriving in a network interface card, a check at diamond 44 determines if the frame is processed by the protocol described herein. If not, the frame is transmitted to the upper protocol layer as indicated at 46. If so, the appropriate authentication key is (derived and) used to authenticate the received frame at48. On authentication, the frame is decrypted at block 50 by using the encryption key. Finally, the frame is transmitted to an upper protocol layer at 52.

The server may transmit a frame using the sequence shown in Figure 5. Application data is received in the Internet Protocol stack at 56. The packets are to be distributed to various clients. A link layer driver then receives a frame at 58. At blocks 60 and 62, the appropriate encryption and authentication keys are applied to a single-pass dual-key algorithm to cipher the packet and generate an authentication tag in parallel. Finally, at 64, the frame is transmitted to the network.

The IT network monitoring devices 18 (Figure 1) operate similarly to the server 12. The server 12 and the monitoring host 18 directly or derivatively maintain the keys to handle many different security associations from clients. An adversary compromising one client host is not able to impersonate another client because the keys for distinct clients/sessions are different and independent. For the domain controller 20, the server 16, and monitoring devices 18, since the number of keys is relatively small when practiced with the derived key mechanism, the keys can be stored in hardware, while still providing proper protection for tamper resistance.

In one embodiment, a frame format may piggyback the Internet Protocol security (IPSEC) frames.

In embodiments, both end-to-end security and traffic visibility for an enterprise network are provided. The mechanism may be implemented entirely in hardware, in some embodiments, which achieves full wire speed performance at lower cost in some cases.

Referring to Figure 6, the hardware solution 99 includes a combined encryption-authentication block labeled as cryptographic engine 70 coupled to a bridge 72 and a MAC processing unit 76. The bridge 72 may include a direct memory access module (not shown). The processing unit 76 communicates with incoming and outgoing packets 80 through a buffer 78. The packets 80 may include the authentication tag (T) 82. For clients 12 and server 16, processing unit 76 is provided with both the encryption and authentication keys, but for intermediate network devices 18, processing unit is provided with only the encryption key, allowing the devices to have visibility to the traffic, but unlikely to be able to fabricate or forge messages to spoof the clients/server in the event the intermediate devices are compromised.

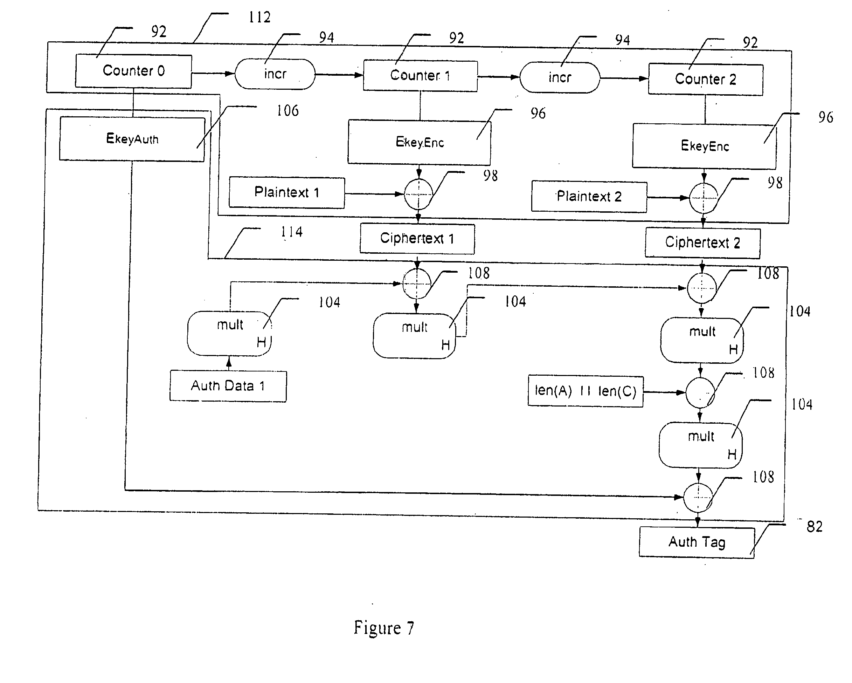

Referring to Figure 7, an embodiment of the single-pass combined encryption-authentication engine 70 is illustrated in further details. Engine 70 includes a cipher block 112 and an authentication block 114 coupled to each other in parallel, to enable the authentication block 114 to generate the authentication tag 96, using an authentication key, in parallel with the cipher block 112 ciphering a plaintext packet into ciphertext having a number of ciphertext blocks successively generated, using an encryption key.

In various embodiments, cipher block 112 operates in AES counter mode, and authentication block 114 operates in AES-GMAC mode. As illustrated cipher block 112 includes a number of counters 92, incrementors 94, forward blocks 96, and a number Boolean function blocks 98, coupled to each other as shown, whereas authentication block 114 includes a number finite field multipliers 104, a forward block 106 and a number of Boolean function blocks 108.

Forward block 106 operates using the authentication key, while forward blocks 96 operate using the encryption key. The ciphertext blocks are successively generated, each by performing a Boolean function (XOR) on a plaintext block and the output of a corresponding forward block 96. For ease of understanding, only two counter 92, forward block 96, Boolean function 98 chains are shown. Those skill in the art will appreciate in practice, typically, multiple counter 92, forward block 96, Boolean function 98 chains are provided.

The first finite field multiplier 104 takes the authentication data as input. Each subsequent finite field multiplier 104 (except the last one) takes as input, the output of a corresponding Boolean function block performing a Boolean function (XOR) on the output of the preceding finite field multiplier 104 and a corresponding ciphertext block. The last finite field multiplier 104 takes as input, the output of a corresponding Boolean function block performing a Boolean function (XOR) on the output of the preceding finite field multiplier 104 and the concatenated length of the authentication tag and the length of the ciphertext. A Boolean operator is performed on the output of the second to last finite field multiplier 104 and the concatenated length of the authentication tag (len(A)) and the ciphertext (len(C)) to generate the authentication tag to accompany the ciphertext of a packet. In various embodiments, the multiplicand H of each of the finite field multipliers 104 is derived in accordance with AES(authentication key, 0¹²⁸).

Thus, for a recipient device, client or server, a complementary combined decipher (not shown) may first compute the authentication tag for the ciphertext using the authentication key, and determine whether the computed authentication tag matches the authentication tag accompanying the ciphertext. If the computed authentication tag does not match the authentication tag accompanying the ciphertext, the frame or packet may be discarded. And the cipher text is decrypted using the encryption key only if the computed authentication tag matches the accompany authentication tag.

For the intermediate network device, it may decrypt the packet to examine the traffic. However, as noted earlier, without the authentication key, the intermediate network device is unlikely to be able to fabricate or forge messages to spoof the clients/server in the event the intermediate devices are compromised.

Referring to Figure 6 again, in various embodiments, the hardware solution 99 may be part of a network interface card or part of an integrated MAC within a processor/chipset. As such, the burden of end-to-end security may be removed from the server 16, increasing the possible scale of the network 14 in some embodiments. This allows a seamless employment of the solution, without affecting higher layer protocols/applications, in some cases.

An embodiment may be included as part of a system, e.g. a system having disk storage, such as a laptop computer, a desktop computer, a server, a game console, a set-top box, a media recorder, and so forth.

An embodiment may be implemented by hardware, software, firmware, microcode, or any combination thereof. When implemented in software, firmware, or microcode, the elements of an embodiment are the program code or code segments to perform the necessary tasks. The code may be the actual code that carries out the operations, or code that emulates or simulates the operations. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc. The program or code segments may be stored in a processor readable medium or transmitted by a computer data signal embodied in a carrier wave, or a signal modulated by a carrier, over a transmission medium. The "processor readable or accessible medium" or "machine readable or accessible medium" may include any medium that can store, transmit, or transfer information. Examples of the processor/machine readable/accessible medium include an electronic circuit, a semiconductor memory device, a read only memory (ROM), a flash memory, an erasable ROM (EROM), a floppy diskette, a compact disk (CD-ROM), an optical disk, a hard disk, a fiber optic medium, a radio frequency (RF) link, etc. The computer data signal may include any signal that can propagate over a transmission medium such as electronic network channels, optical fibers, air electromagnetic, RF links, etc. The code segments may be downloaded via computer networks such as the Internet, Intranet, etc. The machine accessible medium may be embodied in an article of manufacture. The machine accessible medium may include data that, when accessed by a machine, cause the machine to perform the operations described in the following. The term "data" here refers to any type of information that is encoded for machine-readable purposes. Therefore, it may include program, code, data, file, etc.

References throughout this specification to "one embodiment" or "an embodiment" mean that a particular feature, structure, or characteristic described in connection with the embodiment is included in at least one implementation encompassed within the present invention. Thus, appearances of the phrase "one embodiment" or "in an embodiment" are not necessarily referring to the same embodiment. Furthermore, the particular features, structures, or characteristics may be instituted in other suitable forms other than the particular embodiment illustrated and all such forms may be encompassed within the claims of the present application.

Although specific embodiments have been illustrated and described herein, it will be appreciated by those of ordinary skill in the art that a wide variety of alternate and/or equivalent implementations may be substituted for the specific embodiments shown and described, without departing from the scope of the embodiments of the present invention. This application is intended to cover any adaptations or variations of the embodiments discussed herein. Therefore, it is manifestly intended that the embodiments of the present invention be limited only by the claims and the equivalents thereof.

## Claims

1. An apparatus for data encryption and authentication comprising:
a media access control 'MAC' processing unit (76) configured to output one or more packets (80) for transmission over a network (14); and
a combined cipher-authentication unit (70) coupled to the MAC processing unit (76) to cipher each of the packets (80) and generate an authentication tag (82) to accompany each of the ciphered packets prior to their transmissions, the combined cipher-authentication unit (70) being configured to cipher a packet (80) and generate an authentication tag to accompany the ciphered packet in parallel, in a single pass,
**characterised by**:
said apparatus employing an encryption key and an authentication key having different key values (EkeyEnc, EkeyAuth), respectively.

2. The apparatus of claim 1 wherein the combined cipher-authentication unit (70) comprises
a cipher unit (112) to cipher a packet (80) into a ciphered packet having a plurality of ciphertext blocks successively generated using the encryption key (EkeyEnc); and
an authentication unit (114) coupled in a parallel manner to the cipher unit (112) to generate an authentication tag (82) to accompany the cipher text (Ciphertext 1, Ciphertext 2), in parallel with the ciphering of the packet (80), employing an authentication key (EkeyAuth) and successively the ciphertext blocks.

3. The apparatus of claim 2, wherein
the cipher unit (112) operates in Advanced Encryption Standard 'AES' Counter Mode; and
the authentication unit (114) operates in parallel, in Advanced Encryption Standard Galois Message Authentication Code 'AES-GMAC' mode.

4. The apparatus of claim 3, wherein the authentication unit (114) comprises a plurality of Boolean function blocks (108), each performing a Boolean operation on a ciphertext block (Ciphertext 1, Ciphertext 2) and an output of a first finite field multiplication unit (104) to generate an input to a second finite field multiplication unit (104), and each of finite field multiplication units (104) having a secret multiplier defined as AES(Authentication Key, 0¹²⁸).

5. The apparatus of claim 2, wherein the cipher and authentication units (112, 114) are co-located on an integrated circuit.

6. The apparatus of claim 1, wherein the apparatus is a chipset.

7. A system comprising:
one or more processors;
a disk storage coupled to the one or more processors; and
a network interface card coupled to the one or more processors, having
a cipher unit (112) to cipher a plaintext packet generated by the processors for transmission onto a network into a ciphertext having a plurality of ciphertext blocks successively generated employing an encryption key, and
an authentication unit (114) coupled in a parallel manner to the cipher unit to generate an authentication tag to be associated with the ciphertext, in parallel in a single pass with the ciphering of the plaintext packet into the ciphertext, employing an authentication key and successively the ciphertext blocks,
**characterised by**:
the encryption and authentication keys having different key values (EkeyEnc, EkeyAuth).

8. The system of claim 7, wherein
the cipher unit (112) operates in Advanced Encryption Standard Counter Mode; and
the authentication unit (114) operates in parallel, in Advanced Encryption Standard Galois Message Authentication Code 'AES-GMAC' mode.

9. The system of claim 8 wherein the authentication unit (112) comprises a plurality of Boolean function blocks (108), each performing a Boolean operation on a ciphertext block and an output of a first finite field multiplication unit (104) to generate an input to a second finite field multiplication unit (104), and each of finite field multiplication units (104) having a secret multiplier defined as AES (Authentication Key, 0¹²⁸).

10. An article of manufacture comprising:
a computer readable storage medium; and
a plurality of programming instructions stored in the computer readable storage medium to program an apparatus to enable the apparatus to:
receive an encryption key and an authentication key having different key values (EkeyEnc, EkeyAuth);
receive an encrypted packet and an authentication tag 'T' associated with the encrypted packet, the encrypted packet having been encrypted in accordance with Advanced Encryption Standard 'AES' Counter Mode;
compute another authentication tag 'T' ' over the encrypted packet using the authentication key in Advanced Encryption Standard Galois Message Authentication Code 'AES-GMAC' mode; and
determine whether T and T' are equal.

11. The article of claim 10, wherein the programming instructions further enable the apparatus to drop the encrypted packet if T and T' are determined to be unequal.

12. The article of claim 11, wherein the programming instructions further enable the apparatus to decrypt the encrypted packet in accordance with AES Counter Mode, if T and T' are determined to be equal.

13. An apparatus (18) comprising:
a buffer (78) configured to relay network packets (80) transmitted between clients (12) and servers (16) of a network (14), each packet (80) having been encrypted and associated with an authentication tag (82) in a single pass by a client (12) or a server (16) using a corresponding set of an encryption key and an authentication key of a client-server pair, the encryption and authentication keys having different key values (EkeyEnc, EkeyAuth); and
a processing unit (70) coupled to the buffer (78) to decipher and inspect one or more of the packets (80) using the corresponding encryption keys (EkeyEnc), the processing unit (70), in terms of the encryption and authentication keys (EkeyEnc, EkeyAuth), having only the encryption keys (EkeyEnc).

14. The apparatus of claim 13 wherein the processing unit (70) is further configured to derive the encryption keys (EkeyEnc).

## Patentansprüche

1. Vorrichtung zur Datenverschlüsselung und Authentifizierung, die Folgendes umfasst:
eine Medienzugriffssteuerungs-Verarbeitungseinheit, 'MAC'-Verarbeitungseinheit, (76), die konfiguriert ist, ein oder mehrere Pakete (80) zum Senden über ein Netz (14) auszugeben; und
eine kombinierte Verschlüsselungs- und Authentifizierungs-Einheit (70), die mit der MAC-Verarbeitungseinheit (76) gekoppelt ist, um jedes der Pakete (80) zu verschlüsseln und vor dem Senden ein Authentifizierungs-Etikett (82) zu erzeugen, um jedes der verschlüsselten Pakete zu begleiten, wobei die kombinierte Verschlüsselungs- und Authentifizierungs-Einheit (70) konfiguriert ist, in einem einzigen Durchgang ein Paket (80) zu verschlüsseln und parallel ein Authentifizierungs-Etikett zu erzeugen, um das verschlüsselte Paket zu begleiten,
**dadurch gekennzeichnet, dass**:
die Vorrichtung einen Verschlüsselungsschlüssel und einen Authentifizierungsschlüssel, die jeweils unterschiedliche Schlüsselwerte (EkeyEnc, EkeyAuth) aufweisen, anwendet.

2. Vorrichtung nach Anspruch 1, wobei die kombinierte Verschlüsselungs- und Authentifizierungs-Einheit (70) Folgendes umfasst:
eine Verschlüsselungseinheit (112), um ein Paket (80) in ein verschlüsseltes Paket zu verschlüsseln, das mehrere verschlüsselte Textblöcke aufweist, die nacheinander unter Verwendung des Verschlüsselungsschlüssels (EkeyEnc) erzeugt werden; und
eine Authentifizierungseinheit (114), die auf parallele Weise mit der Verschlüsselungseinheit (112) gekoppelt ist, um parallel mit dem Verschlüsseln des Pakets (80) unter Verwendung eines Authentifizierungsschlüssels (EkeyAuth) und nacheinander der verschlüsselten Textblöcke ein Authentifizierungs-Etikett (82) zu erzeugen, um den verschlüsselten Text (Ciphertext 1, Ciphertext 2) zu begleiten.

3. Vorrichtung nach Anspruch 2, wobei
die Verschlüsselungseinheit (112) in der weiterentwickelten Verschlüsselungsstandard-Zählerbetriebsart, 'AES'-Zählerbetriebsart, arbeitet; und
die Authentifizierungseinheit (114) parallel in der weiterentwickelten Verschlüsselungsstandard-Galois-Nachrichtenauthentifizierungs-Betriebsart, 'AES-GMAC'-Betriebsart, arbeitet.

4. Vorrichtung nach Anspruch 3, wobei die Authentifizierungseinheit (114) mehrere boolesche Funktionsblöcke (108) umfasst, von denen jeder eine boolesche Operation an einem verschlüsselten Textblock (Ciphertext 1, Ciphertext 2) und einer ersten Ausgabe einer Endliche-Körper-Multiplikationseinheit (104) ausführt, um eine Eingabe für eine zweite Endliche-Körper-Multiplikationseinheit (104) zu erzeugen, und wobei jede der Endliche-Körper-Multiplikationseinheiten (104) einen geheimen Multiplikator aufweist, der als AES(Authentifizierungsschlüssel,0128) definiert ist.

5. Vorrichtung nach Anspruch 2, wobei die Verschlüsselungs- und Authentifizierungseinheiten (112, 114) gemeinsam in einer integrierten Schaltung angeordnet sind.

6. Vorrichtung nach Anspruch 1, wobei die Vorrichtung ein Chipsatz ist.

7. System, das Folgendes umfasst:
einen oder mehrere Prozessoren;
einen Plattenspeicher, der mit dem einen oder den mehreren Prozessoren gekoppelt ist; und
eine Netzschnittstellenkarte, die mit dem einen oder den mehreren Prozessoren gekoppelt ist und die Folgendes aufweist:
eine Verschlüsselungseinheit (112), um ein Klartext-Paket, das durch die Prozessoren erzeugt wurde, zum Senden in ein Netz in einen verschlüsselten Text zu verschlüsseln, der mehrere von verschlüsselten Textblöcken aufweist, die nacheinander unter Verwendung eines Verschlüsselungsschlüssels erzeugt werden, und
eine Authentifizierungseinheit (114), die auf parallele Weise mit der Verschlüsselungseinheit gekoppelt ist, um in einem einzigen Durchgang ein Authentifizierungs-Etikett, das dem verschlüsselten Text zugeordnet werden soll, parallel mit dem Verschlüsseln des Klartextpakets in den verschlüsselten Text unter Verwendung eines Authentifizierungsschlüssels und nacheinander der verschlüsselten Textblöcke zu erzeugen,
**dadurch gekennzeichnet, dass**
der Verschlüsselungs- und der Authentifizierungsschlüssel unterschiedliche Schlüsselwerte (EkeyEnc, EkeyAuth) aufweisen.

8. System nach Anspruch 7, wobei
die Verschlüsselungseinheit (112) in der weiterentwickelten Verschlüsselungsstandard-Zählerbetriebsart arbeitet; und
die Authentifizierungseinheit (114) parallel in der weiterentwickelten Verschlüsselungsstandard-Galois-Nachrichtenauthentifizierungs-Betriebsart, 'AES-GMAC'-Betriebsart, arbeitet.

9. System nach Anspruch 8, wobei die Authentifizierungseinheit (112) mehrere boolesche Funktionsblöcke (108) umfasst, von denen jeder eine boolesche Operation auf einem verschlüsselten Textblock und einer ersten Ausgabe einer Endliche-Körper-Multiplikationseinheit (104) ausführt, um eine Eingabe für eine zweite Endliche-Körper-Multiplikationseinheit (104) zu erzeugen, und jede der Endliche-Körper-Multiplikationseinheiten (104) einen geheimen Multiplikator aufweist, der als AES(Authentifizierungsschlüssel, 0¹²⁸) definiert ist.

10. Fertigungsprodukt, das Folgendes umfasst:
ein computerlesbares Speichermedium; und
mehrere Programmieranweisungen, die in dem computerlesbaren Speichermedium gespeichert sind, um eine Vorrichtung zu programmieren, um zu ermöglichen, dass die Vorrichtung:
einen Verschlüsselungsschlüssel und einen Authentifizierungsschlüssel, die unterschiedliche Schlüsselwerte (EkeyEnc, EkeyAuth) aufweisen, empfängt;
ein verschlüsseltes Paket und ein Authentifizierungs-Etikett 'T', das dem verschlüsselten Paket zugeordnet ist, empfängt, wobei das verschlüsselte Paket in Übereinstimmung mit der weiterentwickelten Verschlüsselungsstandard-Zählerbetriebsart, 'AES'-Zählerbetriebsart, verschlüsselt worden ist;
ein weiteres Authentifizierungs-Etikett 'T" über das verschlüsselte Paket unter Verwendung des Authentifizierungsschlüssels in der weiterentwickelten Verschlüsselungsstandard-Galois-Nachrichtenauthentifizierungs-Betriebsart, 'AES-GMAC'-Betriebsart berechnet; und
bestimmt, ob T und T' gleich sind.

11. Produkt nach Anspruch 10, wobei die Programmieranweisungen ferner ermöglichen, dass die Vorrichtung das verschlüsselte Paket verwirft, falls bestimmt wird, dass T und T' nicht gleich sind.

12. Produkt nach Anspruch 11, wobei die Programmieranweisungen ferner ermöglichen, dass die Vorrichtung das verschlüsselte Paket in Übereinstimmung mit der AES-Zählerbetriebsart entschlüsselt, falls bestimmt wird, dass T und T' gleich sind.

13. Vorrichtung (18), die Folgendes umfasst:
einen Puffer (78), der konfiguriert ist, Netzpakete (80), die zwischen Clients (12) und Servern (16) eines Netzes (14) gesendet werden, weiterzuleiten, wobei jedes Paket (80) in einem einzigen Durchgang durch einen Client (12) oder einen Server (16) unter Verwendung einer entsprechenden Gruppe aus einem Verschlüsselungsschlüssel und einem Authentifizierungsschlüssel eines Client-Server-Paars verschlüsselt und einem Verschlüsselungs-Etikett (82) zugeordnet worden ist, wobei die Verschlüsselungs- und Authentifizierungsschlüssel unterschiedliche Schlüsselwerte (EkeyEnc, EkeyAuth) aufweisen; und
eine Verarbeitungseinheit (70), die mit dem Puffer (78) gekoppelt ist, um eines oder mehrere der Pakete (80) unter Verwendung der entsprechenden Verschlüsselungsschlüssel (EkeyEnc) zu verschlüsseln und zu überprüfen, wobei die Verarbeitungseinheit (70) hinsichtlich der Verschlüsselungs- und Authentifizierungsschlüssel (EkeyEnc, EkeyAuth) nur die Verschlüsselungsschlüssel (EkeyEnc) aufweist.

14. Vorrichtung nach Anspruch 13, wobei die Verarbeitungseinheit (70) ferner konfiguriert ist, die Verschlüsselungsschlüssel (EkeyEnc) herzuleiten.

## Revendications

1. Appareil de cryptage de données et d'authentification, comprenant :
une unité de traitement de contrôle d'accès au support "MAC" (Media Access Control) (76) configurée pour fournir en sortie un ou plusieurs paquets (80) destinés à être transmis sur un réseau (14) ; et
une unité de chiffrage-authentification combinée (70) reliée à l'unité de traitement MAC (76) pour chiffrer chacun des paquets (80) et générer une balise d'authentification (82) destinée à accompagner chacun des paquets chiffrés avant leurs transmissions, l'unité de chiffrage-authentification combinée (70) étant configurée pour chiffrer un paquet (80) et générer en parallèle une balise d'authentification destinée à accompagner le paquet chiffré, en une seule passe,
**caractérisé en ce que** :
ledit appareil utilise une clé de cryptage et une clé d'authentification ayant respectivement des valeurs de clé différentes (EkeyEnc, EkeyAuth).

2. Appareil selon la revendication 1, dans lequel l'unité de chiffrage-authentification combinée (70) comprend
une unité de chiffrage (112) destinée à chiffrer un paquet (80) en un paquet chiffré ayant une pluralité de blocs de texte chiffré générés successivement en utilisant la clé de cryptage (EkeyEnc) ; et
une unité d'authentification (114) reliée de manière parallèle à l'unité de chiffrage (112) pour générer une balise d'authentification (82) destinée à accompagner le texte chiffré (Ciphertext 1, Ciphertext 2), en parallèle avec le chiffrage du paquet (80) en utilisant une clé d'authentification (EkeyAuth) et après cela, les blocs de texte chiffré.

3. Appareil selon la revendication 2, dans lequel
l'unité de chiffrage (112) fonctionne dans un Mode de Compteur suivant la Norme de Cryptage Evolué "AES" (Advanced Encryption Standard) ; et
l'unité d'authentification (114) fonctionne en parallèle, dans un mode à Code d'Authentification par Message de Galois suivant la Norme de Cryptage Evolué "AES-GMAC" (Advanced Encryption Standard-Galois Message Authentification Code).

4. Appareil selon la revendication 3, dans lequel l'unité d'authentification (114) comprend une pluralité de blocs à fonction Booléenne (108) effectuant chacun une opération Booléenne sur un bloc de texte chiffré (Ciphertext 1, Ciphertext 2) et une sortie d'une première unité de multiplication de champ fini (104) pour générer une entrée d'une seconde unité de multiplication de champ fini (104), et chacune des unités de multiplication de champ fini (104) ayant un multiplicateur secret défini sous la forme AES (Clé d'Authentification, 0¹²⁸).

5. Appareil selon la revendication 2, dans lequel les unités de chiffrage et d'authentification (112, 114) sont colocalisées sur un circuit intégré.

6. Appareil selon la revendication 1, dans lequel l'appareil est un jeu de puces.

7. Système comprenant :
un ou plusieurs processeurs ;
une unité de stockage sur disque reliée auxdits processeurs ; et
une carte d'interface réseau reliée auxdits processeurs, comportant
une unité de chiffrage (112) destinée à chiffrer un paquet de texte clair généré par les processeurs pour leur transmission sur un réseau en un texte chiffré ayant une pluralité de blocs de texte chiffré générés successivement en utilisant une clé de cryptage, et
une unité d'authentification (114) reliée de manière parallèle à l'unité de chiffrage pour générer une balise d'authentification destinée à être associée au texte chiffré, en parallèle et en une seule passe avec le chiffrage du paquet en texte clair, en le texte chiffré, en utilisant une clé d'authentification, et après cela, les blocs de texte chiffré, **caractérisé en ce que** :
les clés de cryptage et d'authentification ont des valeurs de clé différentes (EkeyEnc, EkeyAuth).

8. Système selon la revendication 7, dans lequel l'unité de chiffrage (112) fonctionne dans un Mode de Compteur suivant la Norme de Cryptage Evolué ; et l'unité d'authentification (114) fonctionne en parallèle, dans un mode de Code d'authentification par Message de Galois suivant la Norme de Cryptage Evolué "AES-GMAC".

9. Système selon la revendication 8, dans lequel l'unité d'authentification (112) comprend une pluralité de blocs à fonction Booléenne (108), effectuant chacun une opération Booléenne sur un bloc de texte chiffré et une sortie d'une première unité de multiplication de champ fini (104) pour générer une entrée d'une seconde unité de multiplication de champ fini (104), chacune des unités de multiplication de champ fini (104) ayant un multiplicateur secret défini sous la forme AES (Clé d'Authentification, 0¹²⁸).

10. Article de fabrication, comprenant :
un support de stockage lisible par ordinateur ; et
une pluralité d'instructions de programmation stockées sur le support de stockage lisible par ordinateur pour programmer un appareil afin de permettre à l'appareil de :
recevoir une clé de cryptage et une clé d'authentification ayant des valeurs de clé différentes (EkeyEnc, EkeyAuth) ;
recevoir un paquet crypté et une balise d'authentification "T" associée au paquet crypté, le paquet crypté ayant été crypté conformément au Mode de Compteur suivant la Norme de Cryptage Evolué "AES" ;
calculer une autre balise d'authentification "T"' sur le paquet crypté en utilisant la clé d'authentification dans un mode de Code d'Authentification par Message de Galois suivant la Norme de Cryptage Evolué "AES-GMAC" ; et
déterminer si T et T' sont égaux.

11. Article selon la revendication 10, dans lequel les instructions de programmation permettent en outre à l'appareil d'abandonner le paquet crypté s'il est déterminé que T et T' sont inégaux.

12. Article selon la revendication 11, dans lequel les instructions de programmation permettent en outre à l'appareil de décrypter le paquet crypté conformément au Mode de Compteur AES s'il est déterminé que T et T' sont égaux.

13. Appareil (18) comprenant :
un tampon (78) configuré pour relayer des paquets de réseau (80) transmis entre des clients (12) et des serveurs (16) d'un réseau (14), chaque paquet (80) ayant été crypté et associé à une balise d'authentification (82) en une seule passe par un client (12) ou un serveur (16) en utilisant un ensemble correspondant d'une clé de cryptage et d'une clé d'authentification d'une paire client-serveur, les clés de cryptage et d'authentification ayant des valeurs de clé différentes (EkeyEnc, EkeyAuth) ; et
une unité de traitement (70) reliée au tampon (78) pour déchiffrer et inspecter un ou plusieurs des paquets (80) en utilisant les clés de cryptage correspondantes (EkeyEnc), l'unité de traitement (70), du point de vue des clés de cryptage et d'authentification (EkeyEnc, EkeyAuth) ne comportant que les clés de cryptage (EkeyEnc).

14. Appareil selon la revendication 13, dans lequel l'unité de traitement (70) est en outre configurée pour déduire les clés de cryptage (EkeyEnc).
